# FASCICULE DE BREVET EUROPEEN

(11) **EP 0 512 039 B1**
(45) Date de publication et mention de la délivrance du brevet: **30.11.1994**
(21) Numéro de dépôt: 91903707.7
(22) Date de dépôt: 22.01.1991
(51) Int. Cl.: B29B 7/08, B01J 19/10

(54) **PROCEDE DE FABRICATION D'UN MATERIAU COMPOSITE**
VERFAHREN ZUR HERSTELLUNG ZUSAMMENGESETZTEN MATERIALS
METHOD FOR MANUFACTURING A COMPOSITE MATERIAL

(30) Priorité: 23.01.1990 FR 9000753
(43) Date de publication de la demande: 11.11.1992
(73) Titulaire: S.A.R.L. DIAS INDUSTRIE, F-33380 MARCHEPRIME (FR)
(72) Inventeur: DIAS-COELHO, Alain, F-33600 Pessac (FR); VANDENBUSSCHE, Guy, F-33470 Gujan-Mestras (FR); GEULIN, Laurent, F-33700 Mérignac (FR)
(74) Mandataire: Hasenrader, Hubert
(86) Numéro de dépôt international: FR9100033
(87) Numéro de publication internationale: WO9111308

(56) Documents cités:
- FR-A- 2 051 134
- FR-A- 2 156 893
- US-A- 3 975 248
- US-A- 4 369 100
- Chem. Zentralblatt, No. 33, 1964, abstract No. 2346, R.G. Black et al.: "Die Verwendung von Ultraschallschwingungen als Hilfsmittel bei der Mischung und beim Vergiessen von Harzen", page 263

## Description

La présente invention concerne un procédé de fabrication d'un matériau composite.

De façon générale, la préparation d'un matériau composite implique le mélange d'au moins deux composants qui peuvent être de différentes formes.

Lorsque l'on souhaite réaliser un matériau constitué de composants de renfort tels que des fibres et d'un composant matriciel tel qu'une résine liquide, il est nécessaire d'effectuer l'imprégnation des fibres par la résine liquide. Cette opération est toujours difficile en raison des occlusions d'air au sein des fibres qui entravent la pénétration de la résine. Cette imprégnation est d'ailleurs d'autant plus difficile que le matériau comporte plusieurs couches, trames ou nappes de fibres sous forme d'un drapage. Or lorsque l'imprégnation n'est pas complète, le matériau résultant ne possède pas la structure compacte et dense qui est requise pour certaines utilisations. En effet, l'étanchéité générale du matériau et sa résistance mécanique seront d'autant meilleures que sa structure comportera le moins d'occlusion d'air.

Le FR-A-2 516 441 décrit un matériau composite comprenant au moins un composant de renfort imprégné et au moins un composant matriciel qui sont liés entre eux de telle sorte que l'ensemble est sensiblement exempt d'inclusion d'air.

Le problème technique du dégazage est donc un obstacle important pour la réalisation d'un matériau composite de très grande qualité.

Un autre problème réside dans la répartition et dans l'orientation statistiques des matières de charge dans une matrice liquide.

En effet, les qualités finales du matériau composite dépendent étroitement de l'arrangement spatial des divers composants. Ainsi, par exemple, le mixage des fibres courtes dans une résine liquide est-il une opération fondamentale pour obtenir un matériau composite résistant.

Encore un autre problème réside dans l'instabilité réactionnelle de certains composants qui, lorsqu'ils sont soumis à des mouvements trop brusques ou mis en contact avec d'autres composants, réagissent violemment et ne peuvent donc être mélangés ou combinés par des techniques traditionnelles.

La présente invention a pour but de résoudre ces problèmes techniques de manière satisfaisante.

Ce but est atteint au moyen d'un procédé de fabrication d'un matériau composite comprenant le mélange intime et homogène d'au moins deux composants, caractérisé en ce que l'on met en vibration ledit mélange dans un récipient à une fréquence proche de la moyenne des fréquences de résonance de chacun des composants ou de celle du récipient de manière à dégazer les composants puis on réalise la liaison entre les composants de telle sorte que le matériau composite résultant possède une structure sensiblement exempte d'air inclus, compacte et dense.

Selon une autre caractéristique de l'invention, on détermine la fréquence et l'amplitude de la vibration à utiliser en enregistrant et en analysant au préalable les comportements mécaniques des composants et du récipient pris isolément en réponse à une vibration à laquelle ils sont soumis et dont on fait varier la fréquence de façon continue pour sélectionner celle qui conduit à la résonance.

Selon un mode de mise en oeuvre de l'invention on utilise au moins un composant de renfort et au moins un composant matriciel.

Selon une mise en oeuvre particulière de l'invention, on utilise un composant matriciel polymérisable et on réalise une liaison entre les deux composants par polymérisation.

Selon un autre mode de mise en oeuvre, on utilise un composant matriciel thermoplastique et on réalise la liaison entre les composants de renfort et les composants matriciels par un chauffage à une température suffisante pour provoquer la fusion des composants matriciels.

Grâce à la possibilité qu'a l'invention de mélanger des poudres de manière homogène et ce, quelles que soient leur densité, leur granulométrie, sans pour autant affaiblir l'un des constituants, l'invention permet donc la fabrication de mousses thermoplastiques.

Ces mousses sont obtenues en mélangeant des charges (microbilles de verre, carbone, phénolique, acrilonitrile, acrylique, chlorure de polyvinyle ...) et une matrice thermoplastique en poudre telle que polypropylène, polyamide, copolyamide ...).

L'ensemble sera par la suite chauffé à la température de fusion de la matrice et ce, sous pression.

Le produit final peut avoir une densité comprise entre 0,2 et 0,6 sans limitation de taille.

L'invention permet donc le mélange de poudres quelles quelles soient avec les mêmes avantages qu'un lit fluidisé, à savoir que chaque particule parcourt la même distance. De plus, elles ont toutes le même contact avec les parois du récipient. Les charges électrostatiques peuvent donc se transférer des parois du récipient aux poudres, permettant ainsi une inversion des charges si nécessaire. Le mélange de produits ayant des charges électrostatiques différentes est donc possible.

Selon des variantes de mise en oeuvre, ladite vibration est transmise au mélange par l'intermédiaire des composants matriciels ou des composants de renfort, ou bien du récipient.

Un autre objet de l'invention est un matériau composite comprenant au moins un composant de renfort et au moins un composant matriciel qui sont liés entre eux, caractérisé en ce que le composant de renfort est noyé dans le composant matriciel en étant imprégné par ce dernier de telle sorte que l'ensemble est sensiblement exempt d'inclusion d'air, compact et dense.

Le matériau composite de l' invention est destiné notamment à la construction navale ou aérospatiale,à la construction de réservoirs, d'enveloppes, de carlingues ou de carénages dans tous types d'industries.

Le procédé de l'invention permet d'obtenir, selon les cas, un ébullage, un mouillage, une homogénéisation, une imprégnation, un mixage ou un démixage, une modification de l'interface entre les divers composants. Il en résulte que le composant de renfort est noyé dans le composant matriciel de telle sorte que l'ensemble est sensiblement exempt d'air inclus, compact et dense. Par suite les propriétés mécaniques du matériau solide résultant s'en trouvent améliorées.

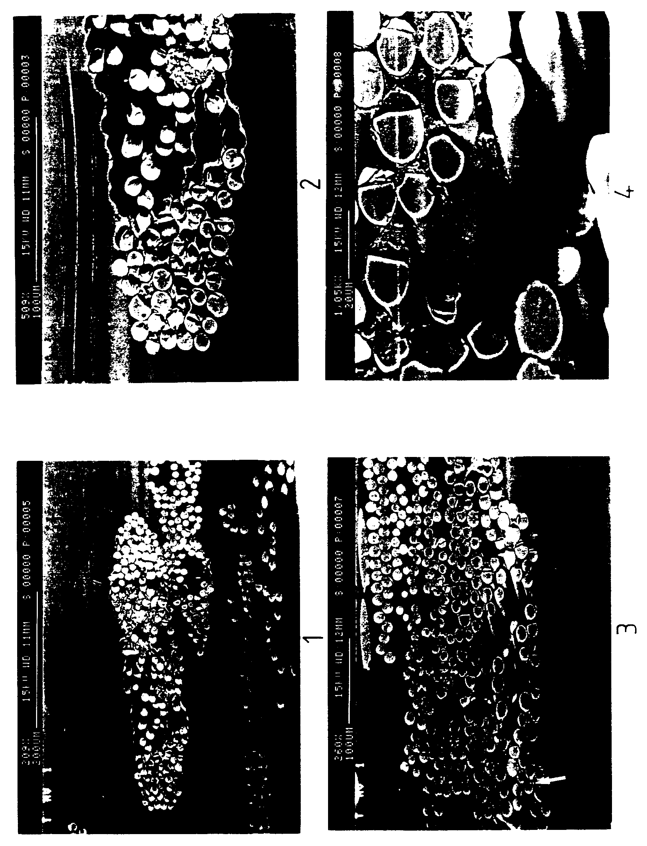

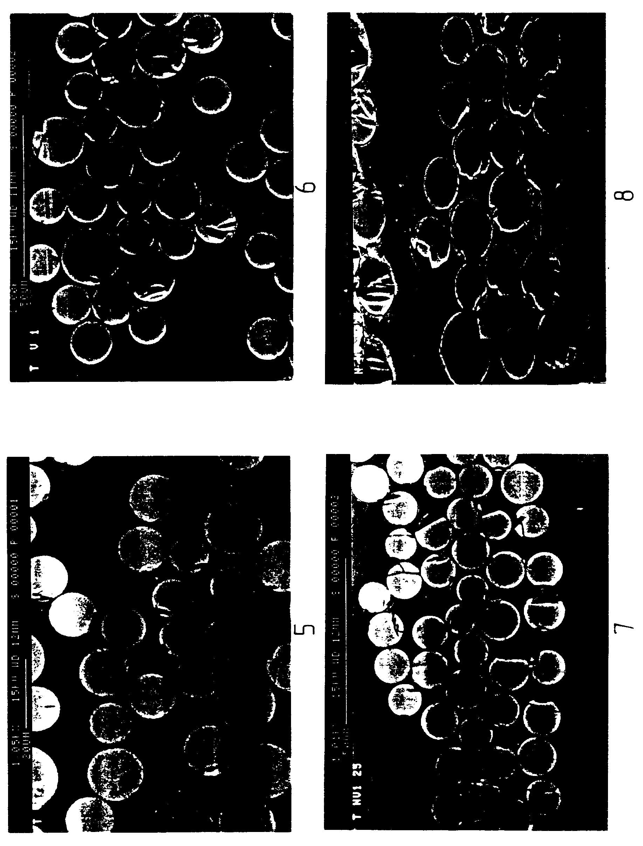

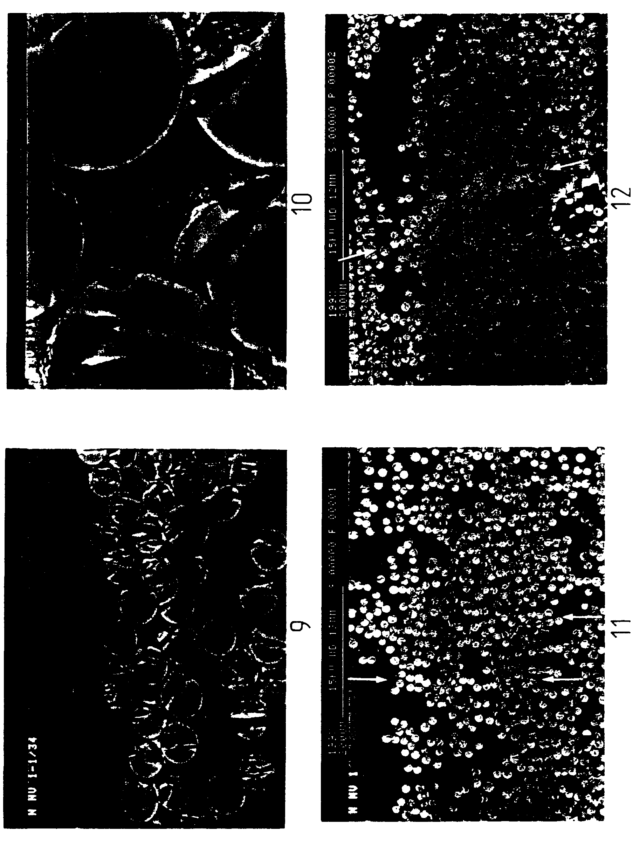

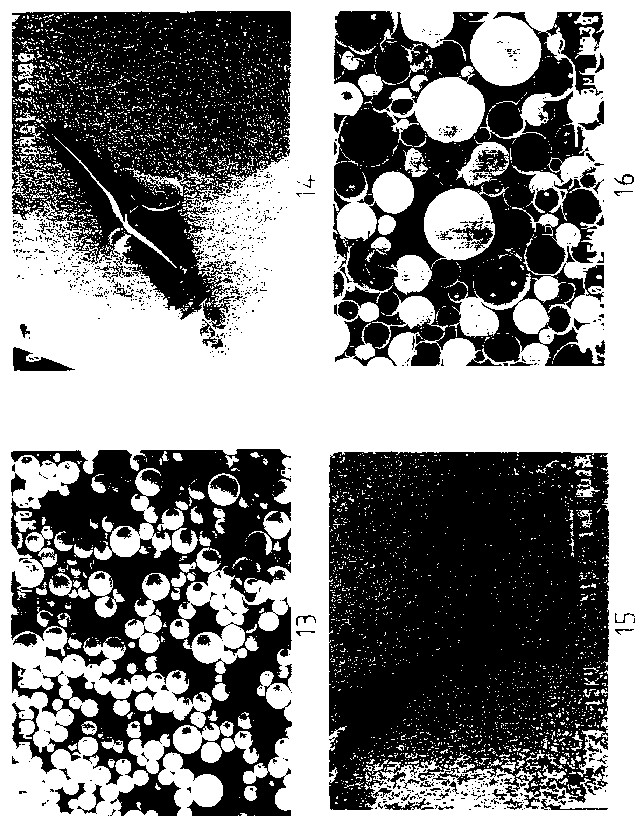

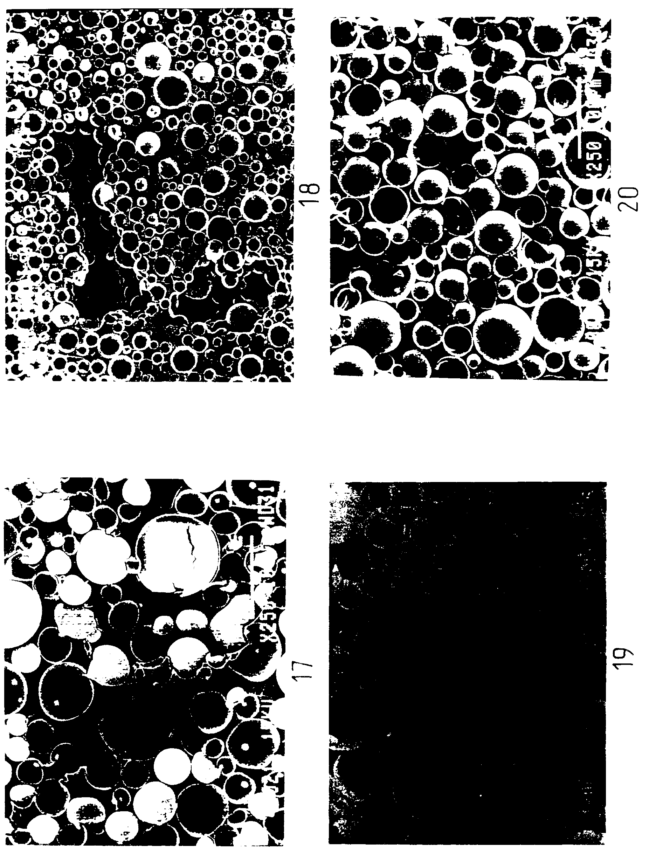

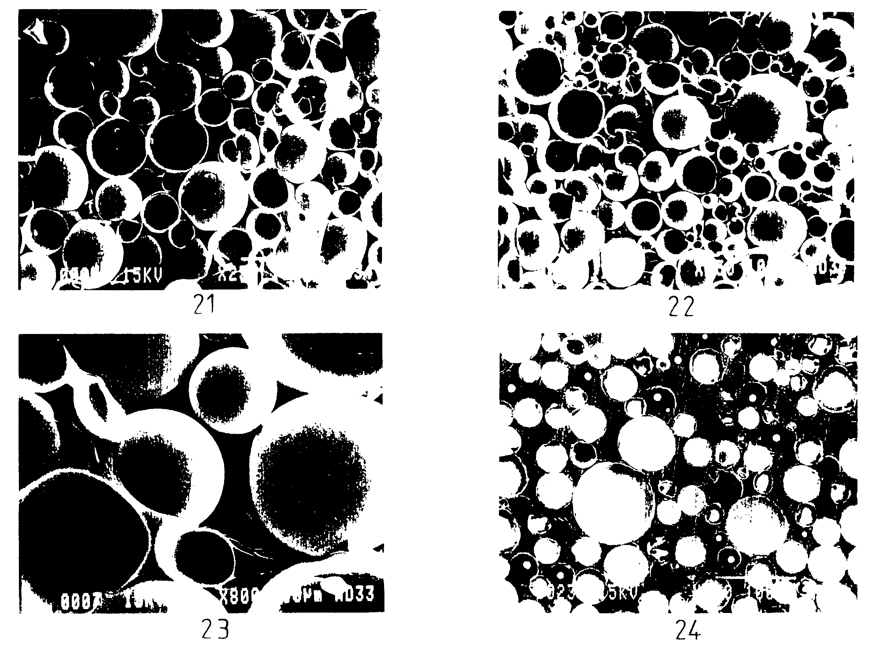

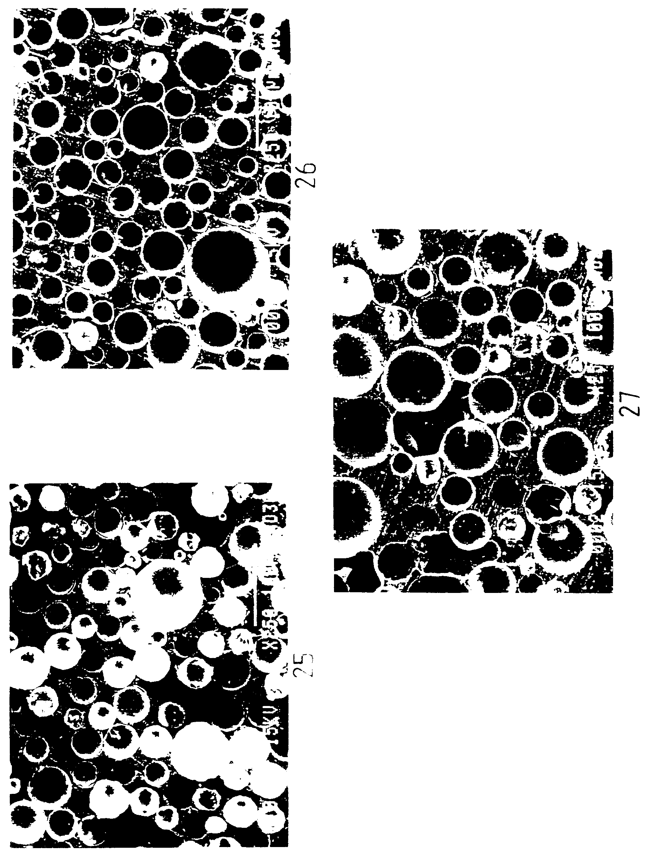

La présente invention sera mieux comprise à la lecture de la description qui va suivre accompagnée des photographies 1 à 27 effectuées au microscope électronique.
I - Dans le cas d'un drapage, c'est-à-dire de plusieurs plis de tissus en fibres orientées (roving) ou aléatoires (mats) ou bien en mèches disposés en strates, on génère des vibrations qui font remonter la matrice liquide (résine) préalablement déposée sous les différents plis, vers la surface libre du drapage.
La vibration permet ainsi de dégazer les fibres et de les superposer au fond du récipient ou du moule les contenant avant leur liaison par polymérisation de la matrice. On établit par aspiration à la surface libre du drapage un niveau de vide suffisant pour permettre l'évacuation de l'air dégazé.
La vibration au niveau du drapage permet donc l'imprégnation de tissus réputés difficiles comme les tissus très épais, des tissus multidirectionels ou des structures tricotées réputées, elles aussi, très difficiles à imprégner entre chaînes et trames.
Pour des composants de renfort constitués par exemple de fibres de verre ou de carbone et des composants matriciels tels qu'une résine polyester ou époxy, la fréquence de vibration est proche de la moyenne des fréquences de résonance de chacun des composants et est par exemple de 65 ± 25 Hz. L'amplitude à adopter sera fonction du grammage du tissu de fibres.
II - Le procédé de l'invention s'applique également dans le but d'obtenir un matériau composite dont les composants de renfort sont constitués de fibres courtes. Les fibres courtes sont, par exemple, mélangées avec des matrices thermoplastiques ou thermodurcissables.
Dans ce cas, la vibration permet d'obtenir non seulement une imprégnation des fibres par la matrice liquide mais également leur mixage ou leur défloculation entraînant ainsi une répartition et une orientation homogènes des fibres dans le volume de matrice.
A titre d'exemples, la fréquence de la vibration permettant d'obtenir la défloculation des fibres courtes de cellulose dans une matrice aqueuse sera avantageusement de 180 Hz ± 15 Hz qui correspond sensiblement à la moyenne des fréquences de résonance des divers composants.
Pour des fibres courtes de verre ou de carbone dans des résines époxy ou polyuréthanes modifiées, la fréquence de la vibration sera de 60 Hz ± 10 Hz et l'amplitude d'environ 3 mm.
III - Dans le cas où les composants matriciels sont sous forme solide comme pour les matrices en poudre et où les composants de renfort sont des fibres, la vibration provoque une dilatation transversale et un écartement des fibrilles constituant les torons de fibres de telle sorte que les grains de poudre viennent se loger dans les espaces ainsi dégagés. On réalise ainsi des structures pré-imprégnées sèches.
Lorsque l'on utilise une poudre thermoplastique, la liaison entre les fibres et le composant matriciel thermoplastique est réalisée à la suite de la pré-imprégnation par chauffage de la structure à une température suffisante pour provoquer la fusion des grains de poudre thermoplastique.
A titre d'exemple, la fréquence de la vibration utilisée pour imprégner des fibres longues de carbone par une poudre thermoplastique sera avantageusement de 110 ± 15 Hz et son amplitude sera adaptée à la granulométrie de la poudre.
IV - Le procédé de l'invention s'applique également à l'imprégnation de matières de charge telles que des microbilles de matière minérale (silice, sable, verre,carbone ...), des microbilles de matières organiques (acrylique, chlorure de polyvinyle, acrilonitrile, phénolique, polystyrène ...), des cristaux ou fibres de céramique, des fibres de carbure ou de nitrure de silicium, des macrobilles (tous thermoplastiques, verre et rafle de maïs ...).
Comme exemple : on retiendra la fabrication des mousses syntactiques. Les mousses syntactiques sont des matériaux de compression ayant une très faible densité (0,3 à 0,6) réalisés par mélange de microbilles de verre creuses (voir photo 13) de granulométrie comprise entre 10 et 150 µm avec une matrice légère (résine polyester ou époxyde). Le mélange classique ou malaxage mécanique provoque généralement la rupture de certaines billes dont l'épaisseur des parois est d'environ 0,5 à 2 microns et par suite une augmentation des inclusions d'air.
Les différentes mousses existantes non vibrées présentent de nombreux défauts aléatoires, que l'on peut observer sur les photos 14 à 18 où apparaissent de nombreuses cavités qui ne sont pas comblées par les microbilles de plus petits diamètres.
1ère méthode : Mousse haute technologie.
On recherche et on cale une fréquence de manière à dilater l'espace pris par les microbilles. On utilise ainsi la fréquence de résonance des microbilles dans le moule et ce "en opposition de phase" avec le moule. Cela produit une expansion conduisant à un arrangement ordonné des microbilles. La vibration est maintenue pendant tout le temps de charge du moule (photos 19 et 20 - remplissage à une fréquence de 84 Hz). Une densification très nette s'est faite par rapport à l'échantillon non vibré. Puis on tasse les microbilles ainsi rangées, en les vibrant "en phase" avec le moule (ex : 30 Hz ± 5) (photos 21-23). La prolongation de la vibration n'affecte ni l'intégrité des billes, ni l'interface résine-bille tout en injectant la résine, par en-dessous, tandis que l'on fait le vide par aspiration au-dessus du mélange pour favoriser la migration de la résine.
La résistance en compression du matériau obtenu à 35 % de billes en masse est de 70 à 130 MPa.
Ce matériau résiste mieux que la résine seule aux agents chimiques et à l'humidité.
On obtient les caractéristiques physiques suivantes :

| | |
|---|---|
| Résistance compression uniaxiale | 3 - 3,6 daN/mm2 |
| Résistance à la traction | 1,2 - 1,3 daN/mm2 |
| Résistance cisaillement | 1,8 daN/mm2 |
| Module d'élasticité en compression | 180 - 200 daN/mm2 |
| Module d'élasticité en traction | 90 daN/mm2 |

2ème méthode : Mousse haute technologie.
Microbilles et résine sont rassemblées dans un récipient qui, mis en vibration, génère des flux internes de matière aboutissant à un mélange très homogène.
La vibration dans ce cas permet un très bon mouillage des microbilles et une parfaite maîtrise du rapport de charge.
Les résultats comparatifs sont illustrés par les photos 24 à 27.
V - Le mélange de composants en phase sèche tels que des poudres peut être réalisé avantageusement par le procédé de l'invention.
Ainsi, on met dans un récipient différentes poudres de granulométries et de densités variables et l'on effectue un balayage de fréquences afin de déterminer la fréquence de résonance pour obtenir un mélange extrêmement intime. Ce mélange résulte d'un flux généré par rebondissement inter-particulaires. Ce flux peut être créé à partir d'un mouvement vertical ascensionnel du centre vers les parois du récipient ou inversement. Il existe aussi, de part certains calages, la possibilité de générer des mouvements alternatifs permettant de filtrer, trier, choisir ou sélectionner certains composants.
Une application particulièrement avantageuse du procédé de l'invention est de respecter des doses extrêmement précises et de faible importance de composants dans la mise en oeuvre de quantités industrielles très importantes de mélanges.
Le mélange intime et homogène de composants peut aussi être réalisé avantageusement par le procédé de l'invention surtout lorsque au moins l'un des composants est un produit instable susceptible de donner lieu, à lui seul ou au contact de l'un des autres composants, à une réaction violente telle qu'une explosion, en étant soumis à des mouvements trop brusques.
La sensibilité des composants pourra être respectée en ajustant et en contrôlant la fréquence et l'amplitude de la vibration utilisée pour le mélange.
Cette méthode est également applicable à la fabrication de mousses basse technologie. Les charges qui sont utilisées peuvent être de la rafle de maïs, des billes plastiques ou polystyrènes de fort diamètre (5 à 10 mm). La résistance ainsi obtenue est relativement faible, de 10 à 100 MPa et ce en permettant la réalisation de gros volumes.
VI - L'invention prévoit de transmettre la vibration au mélange par l'intermédiaire du récipient ou des composants matriciels ou bien encore des composants de renfort.
Lorsque le récipient est directement relié à la source de vibration, il peut soit entrer en résonance et se déformer au niveau de sa base ou de ses parois latérales en transmettant le mouvement vibratoire aux composants qu'il contient ou bien ne pas se déformer et transmettre directement la vibration au mélange .
- La déformation du récipient a pour effet de créer des flux de matière en vase qui prennent la forme de mouvements ascendants centraux ou périphériques qui, par répétition, conduisent au dégazage des composants. De manière avantageuse, on établira, par aspiration ,le vide à l'intérieur du récipient, ce qui provoquera la dilatation des inclusions d'air et l'évacuation de l'air extrait après dégazage. De cette manière, on obtient, après liaison par un traitement physico-chimique (polymérisation..), un matériau composite de très bonne qualité dans lequel les composants de renfort sont en contact direct sur toute leur surface avec les composants matriciels.
- Dans l'un autre mode de mise en oeuvre,la vibration est générée par une sonde au contact direct des composants de renfort ou matriciels. Cette sonde produit un effet de palme qui aboutit comme décrit précédemment au mouvement et au dégazage des composants.

En récipient indéformable, des accélérations de l'ordre de plusieurs g sont communiquées au mélange . Chacun des composants subit ces accélérations de façon différente selon son inertie propre, mais au bout d'un certain temps, le mélange devient homogène et réagit de façon uniforme aux accélérations.
Il convient dans certains cycles de mise en oeuvre, de transférer le mélange ainsi obtenu sans l'endommager, ce qui nécessite de faire vibrer également les moyens de transfert (exemples : goulottes, tapis, tubes, tuyaux ..). L'état vibratoire du mélange est conservé au cours de ce transfert.
Dans un autre mode, les moyens de transfert sont mis en vibration indépendamment du récipient, c'est le cas par exemple pour la cellulose où le moyen de transfert est un tapis tendu qui est le seul à être vibré car la qualité est obtenue pendant le temps de transfert. Dans l'exemple, son but est de défloculer, de maintenir les fibres totalement séparées, ce qui aboutit à une très bonne homogénéité du mélange.
VII - Les avantages du procédé de l'invention sont illustrés par les résultats aux essais suivants en référence aux photographies 1 à 27:
A -Gain de poids par économie de résine pour même quantité de tissu

| | épaisseur | poids |
|---|---|---|
| élément normalement travaillé | 9,5 à 10 mm | 14,42 kg/m² |
| élément vibré selon le procédé de l'invention | 7,5 à 8 mm | 11,8 kg/m² |
| gain | 2 mm | 2,62 kg/m² |

On peut donc choisir le rapport tissu/résine de manière à obtenir un gain de résine.
B - Augmentation des résistances mécaniques :
Des essais en traction, en flexion et délaminage en flexion ont été effectués sur des éprouvettes tirées dans une même plaque, d'épaisseur 9,5 à 10 mm pour le matériau non vibré, d'épaisseur 7,5 à 8 mm pour le matériau vibré selon le procédé de l'invention.
B.1- Essais de traction :
- Conditions :: - éprouvette rectangulaire
- longueur 250 mm, plusieurs largeurs
- vitesse de traction 5 mm/mn
- Résultats :: amélioration de l'ordre de 22 % de la contrainte de rupture.
B.2- Essais de délaminage en flexion :
- Conditions :: - éprouvette rectangulaire
- plusieurs largeurs
- distance entre appuis 50 mm
- vitesse de descente 1 mm/mn
- Résultats :: contraintes à la rupture identiques pour les 2 matériaux. Si on réduit la distance entre appuis l'élément vibré présente la meilleure résistance au délaminage.
B.3 - Essais de flexion :
- Conditions :: - éprouvette rectangulaire
- longueur 250 mm, plusieurs largeurs
- vitesse de descente 10 mm/mn
- Résultats :: amélioration d'environ 23 % de la contrainte de rupture. Il est à noter que la distance entre appuis de 150 mm pénalise l'élément vibré.
C - Meilleure constitution et homogénéité du matériau composite obtenu.
La comparaison des structures de matériaux composites obtenus selon les techniques traditionnelle avec ceux obtenus selon le procédé de l'invention se fonde sur les photographies 1 à 27 effectuées au microscope électronique.

La photographie 1 représente un échantillon non vibré en section transversale et en vue de détail au microscope électronique à balayage (MEB) à électron rétro diffusé (ERD) d'un paquet de fibres coupées transversalement. On note l'abondance des vides dans la structure.

La photographie 2 représente en détail la photo précédente où les fibres sont disjointes et localement libres de toute résine.

La photographie 3 représente un échantillon non vibré en section transversale et en vue de détail au MEB en ERD d'un paquet de fibres coupées transversalement. On note à gauche la délamination (flèche blanche) et les vides dans les paquets de fibres.

La photographie 4 représente un détail du centre de la photo précédente.

La photographie 5 représente un échantillon vibré en section transversale et en vue de détail au MEB en ERD. La résine apparaît en gris et les fibres, coupées transversalement, apparaissent en blanc. Il n'y a pas de décollement visible à l'interface fibre/résine.

La photographie 6 représente un échantillon vibré en section transversale et en vue de détail au MEB en ERD d'un autre champ. Quelques-unes des fibres montrent un interstice entre fibre et résine (flèches).

La photographie 7 représente un échantillon non vibré en section transversale et en vue de détail au MEB en ERD. La résine apparaît en gris, et les fibres coupées transversalement apparaissent en blanc. Il y a un décollement de la résine à toutes les interfaces fibres/résine (liseré noir sur le pourtour des fibres).

La photographie 8 représente un échantillon non vibré en section longitudinale et en vue de détail au MEB en ERD. La résine apparaît en gris et les fibres coupées transversalement apparaissent en blanc. Comme dans le cas précédent, toutes les fibres sont marquées par un retrait de la résine (liseré noir sur le pourtour des fibres).

La photographie 9 représente un échantillon non vibré en section longitudinale et en vue de détail au MEB en ERD. La résine apparaît en gris et les fibres, coupées transversalement, apparaissent en blanc. Comme dans le cas précédent, toutes les fibres sont marquées par un retrait de la résine (liseré noir sur le pourtourdes fibres). La flèche indique le champ de la photo 10.

La photographie 10 représente une vue de détail de la zone fléchée sur la photo précédente. On note la texture granuleuse de la résine et des ouvertures à l'interface fibre/résine.

La photographie 11 représente un échantillon non vibré en section longitudinale et en vue de détail au MEB en ERD. La résine apparaît en gris et les fibres, coupées transversalement, apparaissent en blanc. On note la délamination dans le plan perpendiculaire à celui de la stratification.

La photographie 12 représente un échantillon non vibré en section longitudinale et en vue de détail au MEB en ERD. La résine apparaît en gris et les fibres, coupées transversalement, apparaissent en blanc. Cette photo illustre un autre exemple de délamination hors plan de stratification.

La photographie 13 représente un échantillon de microbilles sans résine.

Les photographies 14 à 18 représentent des échantillons de mousses syntactiques obtenues sans vibration(G = 250 et G =100).

Les photographies 19 et 20 représentent un échantillon vibré de microbilles pendant la charge du moule.

Les photographies 21 à 23 représentent le tassement de l'échantillon de microbilles par vibration en phase avec le moule.

Les photographies 24 à 27 représentent des examens comparatifs sur coupe polie d'échantillons vibrés et non vibrés de mousses syntactiques.

L'analyse des photos montre que les fentes sont en moyenne plus importantes en dimensions (plus larges et plus longues) dans l'échantillon non vibré, où elles peuvent atteindre plus d'un millimètre de long, que dans l'échantillon vibré.

L'analyse qualitative indique par ailleurs que ces défauts sont 2 à 4 fois plus abondants dans l'échantillon non vibré que dans celui vibré. L'écart le plus important est constaté dans la section transversale.

Les différences entre le matériau stratifié réalisé selon le procédé classique et celui réalisé par application du procédé de l'invention concernent :
- les défauts de mouillage des fibres,
- le volume des retraits de la résine à l'interface fibre-résine,
- le nombre et l'importance des délaminations pour lesquelles l'échantillon vibré révèle une amélioration d'un facteur allant de 2 à plus de 10 par rapport à l'échantillon non vibré.

Par ailleurs, l'échantillon vibré se distingue par une distribution plus homogène des fibres dans la résine, par une plus forte densité de fibres et par un ébullage sensiblement meilleur.

L'étude de la reprise en eau effectuée sur des échantillons de matériau composite stratifié obtenu selon le procédé de l'invention permet de comparer quantitativement le mouillage des fibres par la résine, donc la durée de vie du stratifié.

On réalise la stratification d'une plaque de 500 x 500 mm de verre ou Kevlar/époxy dont l'ébullage est effectué soit manuellement, soit par le procédé de l'invention.

On découpe des échantillons de 400 x 150 mm au centre de la plaque.

### Echantillons :

- A: : "Rovimat" 300 x 300 mm résine époxy n° 1 ébullé manuellement ϑ = 16°C
- B: : Idem A ébullé et vibré ϑ = 16°C
- C: : Kevlar 48 verre 65 mat 200 (380 g de tissus) résine époxy n° 1 ébullé manuellement ϑ = 16°C
- D: : idem C ébullé et vibré ϑ = 16°C.

Les résines époxy 1 et 2 sont de qualité identiques. La résine n° 2 a une viscosité plus faible.

### RESULTATS :

| REPERE | ϑ RESINE °C | EPAISSEUR | P₀ en g | P₁ en % | P₂ en % |
|---|---|---|---|---|---|
| A ₘₐₙᵤₑₗ | 16° | 5,9 | 453,5 | 1,87 | 3,74 |
| B _{vibré} | 16° | 6,3 | 456,0 | 0,43 | 1,64 |
| C ₘₐₙᵤₑₗ | 16° | 6,6 | 470,3 | 3,12 | 5,14 |
| D _{vibré} | 16° | 6,1 | 455,6 | 0,52 | 0,76 |

Les échantillons A, B, C, D ont été réalisés dans des conditions identiques (ϑ = 16°C), donc comparatives :
On note la très nette amélioration apportée par le procédé de l'invention.

La reprise en eau importante du Kevlar (déjà constatée sur d'autres échantillons) en manuel est considérablement améliorée par la vibration.

## Revendications

1. Procédé de fabrication d'un matériau composite comprenant le mélange intime et homogène d'au moins deux composants, par mise en vibration dudit mélange dans un récipient à une fréquence proche de la moyenne des fréquences de résonance de chacun des composants ou de celle du récipient de manière à dégazer les composants puis en réalisant la liaison entre les composants, de telle sorte que le matériau composite résultant possède une structure sensiblement exempte d'air inclus, compacte et dense.

2. Procédé selon la revendication 1, caractérisé en ce que l'on détermine la fréquence et l'amplitude de la vibration à utiliser en enregistrant et en analysant au préalable les comportements mécaniques des composants et du récipient pris isolément en réponse à une vibration à laquelle ils sont soumis et dont on fait varier la fréquence de façon continue pour sélectionner celle qui conduit à la résonance.

3. Procédé selon l'une des revendications 1 ou 2, caractérisé en ce qu'on applique respectivement une vibration au mélange et une vibration au récipient, les deux vibrations étant en phase.

4. Procédé selon l'une des revendications précédentes, caractérisé en ce qu'on utilise un récipient dans lequel on établit une aspiration suffisante pour évacuer l'air dégazé.

5. Procédé selon l'une des revendications précédentes, caractérisé en ce qu'on utilise au moins un composant de renfort et au moins un composant matriciel.

6. Procédé selon l'une des revendications précédentes, caractérisé en ce qu'on utilisé au moins un composant matriciel polymérisable.

7. Procédé selon l'une des revendications précédentes, caractérisé en ce qu'on réalise la liason entre les composants par une polymérisation.

8. Procédé selon la revendication 5, caractérisé en ce qu' on réalise la liaison entre les composants de renfort et les composants matriciels par un chauffage à une température suffisante pour provoquer la fusion des composants matriciels.

9. Procédé selon l'une des revendications 1 à 7, caractérisé en ce qu'on utilise des composants de renfort comprenant des microbilles de verre.

10. Procédé selon l'une des revendications pécédentes, caractérisé en ce qu' on utilise des composants de renfort comprenant au moins une nappe de fibres.

11. Procédé selon la revendication 10,caractérisé en ce qu' on utilise des composants de renfort comprenant des fibres courtes.

12. Procédé selon l'une des revendications pécédentes, caractérisé en ce qu'on utilise des composants matriciels constitués d'une résine liquide.

13. Procédé selon l'une des revendications 1 à 11,caractérisé en ce qu'on utilise des composants matriciels constitués d'une poudre sèche de matière thermoplastique.

14. Procédé selon l'une des revendications précédentes, caractérisé en ce qu'on applique ladite vibration au mélange par l'intermédiaire des composants matriciels.

15. Procédé selon l'une des revendications 1 à 13, caractérisé en ce qu'on applique ladite vibration au mélange par l'intermédiaire des composants de renfort.

16. Procédé selon l'une des revendications 1 à 13, caractérisé en ce qu'on applique ladite vibration au melange par l'intermédiaire du récipient.

17. Procédé selon la revendication 1, caractérisé en ce qu'on utilise au moins un composant constitué d'un produit instable susceptible de produire, à lui seul ou au contac de l'un des autres composants, une explosion.

18. Procédé selon l'une des revendications précédentes, caractérisé en ce que la fréquence de la vibration est comprise entre 30 et 180 Hz.

## Claims

1. Method of manufacturing a composite material comprising the intimate and homogenous mixture of at least two components, by vibrating said mixture in a receptacle at a frequency close to the mean of the resonant frequencies of each of the components or of the receptacle so as to degas the components, then by bonding the components together so that the resulting composite material has a structure which is substantially free from included air, and which is compact, and dense.

2. Method according to claim 1, characterized in that the frequency and amplitude of the vibration to be used are determined by previously recording and analyzing the mechanical behaviors of the components ad of the receptacle taken in isolation in response to a vibration to which they are subjected and whose frequency is varied continuously so as to select the frequency leading to the resonance.

3. Method according to one of claims 1 or 2, characterized in that a vibration is applied respectively to the mixture and to the receptacle, both vibrations being in phase.

4. Method according to one of the preceding claims, characterized in that a receptacle is used in which sufficient suction is established to remove the degassed air.

5. Method according to one of the preceding claims, characterized in that at least one reinforcing component and at least one matrix component are used.

6. Method according to one of the preceding claims, characterized in that at least one polymerizable matrix component is used.

7. Method according to one of the preceding claims, characterized in that bonding between the components is obtained by a polymerization.

8. Method according to claim 5, characterized in that bonding between the reinforcing components and the matrix components is obtained by heating to a temperature high enough to melt the matrix components.

9. Method according to one of claims 1 to 7, characterized in that reinforcing components comprising microbeads of glass are used.

10. Method according to one of the preceding claims, characterized in that reinforcing components comprising at least one sheet of fibers are used.

11. Method according to claim 10, characterized in that reinforcing components comprising short fibers are used.

12. Method according to one of the preceding claims, characterized in that matrix components constituted by a liquid resin are used.

13. Method according to one of claims 1 to 11, characterized in that matrix components are used constituted by a dry powder of thermoplastic material.

14. Method according to one of the preceding claims, characterized in that said vibration is applied to the mixture via the matrix components.

15. Method according to one of claims 1 to 13, characterized in that said vibration is applied to the mixture via the reinforcing components.

16. Method according to one of claims 1 to 13, characterized in that said vibration is applied to the mixture via the receptacle.

17. Method according to claim 1, characterized in that at least one component is used which component is constituted by an unstable product capable of producing an explosion, on its own or when in contact with one of the other components.

18. Method according to one of the preceding claims, characterized in that the vibration frequency lies within the range of 30 Hz to 180 Hz.

## Patentansprüche

1. Verfahren zur Herstellung von Verbundwerkstoffen, bei dem mindestens zwei Bestandteile innig und homogen vermischt werden, wobei das Gemisch zur Entgasung der Bestandteile in einem Behälter bei einer Frequenz, die in der Nähe des Mittelwerts der Resonanzfrequenz jedes Bestandteile oder der Resonanzfrequenz des Behälters liegt, in Schwingungen versetzt wird, und anschließend die Verbindung der Bestandteile vorgenommen wird, so daß der resultierende Verbundwerkstoff eine Struktur aufweist, die im wesentlichen frei von Lufteinschlüssen sowie kompakt und dicht ist.

2. Verfahren nach Anspruch 1,
dadurch gekennzeichnet, daß
die Frequenz und die Amplitude der anzuwendenden Schwingungen in der Weise bestimmt werden, daß zuvor das mechanische Verhalten der Bestandteile und des Behälters unabhängig aufgrund des Ansprechens auf Schwingungen, denen sie ausgesetzt werden und deren Frequenz kontinuierlich variiert wird, registriert und analysiert wird, um die zur Resonanz führende Frequenz auszuwählen.

3. Verfahren nach Anspruch 1 oder 2,
dadurch gekennzeichnet, daß das Gemisch und der Behälter jeweils in Schwingungen versetzt werden, wobei die beiden Schwingungen in Phase sind.

4. Verfahren nach einem der vorhergehenden Ansprüche,
dadurch gekennzeichnet, daß
ein Behälter verwendet wird, bei dem eine ausreichende Absaugung zur Entfernung der beim Entgasen freigesetzten Luft vorgesehen ist.

5. Verfahren nach einem der vorhergehenden Ansprüche,
dadurch gekennzeichnet, daß
mindestens ein zur Verstärkung dienender Bestandteil und mindestens ein matrixbildender Bestandteil verwendet werden.

6. Verfahren nach einem der vorhergehenden Ansprüche,
dadurch gekennzeichnet, daß
mindestens ein polymerisierbarer matrixbildender Bestandteil verwendet wird.

7. Verfahren nach einem der vorhergehenden Ansprüche,
dadurch gekennzeichnet, daß
die Verbindung zwischen den Bestandteilen durch Polymerisation vorgenommen wird.

8. Verfahren nach Anspruch 5,
dadurch gekennzeichnet, daß
die Verbindung zwischen den zur Verstärkung dienenden Bestandteilen und den matrixbildenden Bestandteilen durch Erhitzen auf eine Temperatur, die zum Schmelzen der matrixbildenden Bestandteile ausreicht, vorgenommen wird.

9. Verfahren nach einem der Ansprüche 1 bis 7,
dadurch gekennzeichnet, daß
zur Verstärkung dienende Bestandteile verwendet werden, die Glas-Mikrokügelchen umfassen.

10. Verfahren nach einem der vorhergehenden Ansprüche,
dadurch gekennzeichnet, daß
zur Verstärkung dienende Bestandteile verwendet werden, die mindestens eine Lage von Fasern umfassen.

11. Verfahren nach Anspruch 10,
dadurch gekennzeichnet, daß
zur Verstärkung dienende Bestandteile verwendet werden, die kurze Fasern umfassen.

12. Verfahren nach einem der vorhergehenden Ansprüche,
dadurch gekennzeichnet, daß
matrixbildende Bestandteile verwendet werden, die aus einem flüssigen Harz bestehen.

13. Verfahren nach einem der Ansprüche 1 bis 11,
dadurch gekennzeichnet, daß
matrixbildende Bestandteile verwendet werden, die aus einem trockenen Pulver aus einem thermoplastischen Material bestehen.

14. Verfahren nach einem der vorhergehenden Ansprüche,
dadurch gekennzeichnet, daß
das Gemisch über die matrixbildenden Bestandteile in Schwingungen versetzt wird.

15. Verfahren nach einem der Ansprüche 1 bis 13,
dadurch gekennzeichnet, daß
das Gemisch über die zur Verstärkung dienenden Bestandteile in Schwingungen versetzt wird.

16. Verfahren nach einem der Ansprüche 1 bis 13,
dadurch gekennzeichnet, daß
das Gemisch über den Behälter in Schwingungen versetzt wird.

17. Verfahren nach Anspruch 1,
dadurch gekennzeichnet, daß
mindestens ein Bestandteil verwendet wird, der aus einem instabilen Material besteht, das allein oder in Kontakt mit einem der übrigen Bestandteile zu einer Explosion führen kann.

18. Verfahren nach einem der vorhergehenden Ansprüche,
dadurch gekennzeichnet, daß
die Frequenz der Schwingungen 30 bis 180 Hz beträgt.
